# EUROPEAN PATENT SPECIFICATION

(11) **EP 3 584 808 B1**
(45) Date of publication and mention of the grant of the patent: **06.10.2021**
(21) Application number: 18178212.9
(22) Date of filing: 18.06.2018
(51) Int. Cl.: H05B 3/24, H01C 7/02, H01C 1/14, F24H 3/04

(54) **PTC HEATING MODULE FOR HEATING A FLUID**
PTC-HEIZMODUL ZUR ERWÄRMUNG EINER FLÜSSIGKEIT
MODULE DE CHAUFFAGE PTC DESTINÉ À CHAUFFER UN FLUIDE

(43) Date of publication of application: 25.12.2019
(73) Proprietor: Mahle International GmbH, 70376 Stuttgart (DE)
(72) Inventor: KOHL, Michael, 74321 Bietigheim-Bissingen (DE); MARLIER, Eric, 67120 Kolbsheim (FR); PÄTZOLD, Stefan, 70347 Stuttgart (DE); VIEHRIG, Falk, 70469 Stuttgart (DE)
(74) Representative: BRP Renaud & Partner mbB Rechtsanwälte Patentanwälte Steuerberater

(56) References cited:
- EP-A1- 0 489 528
- EP-A1- 1 492 131
- EP-A1- 2 590 179
- US-A- 5 658 479

## Description

The present invention relates to a PTC heating module as well as to a heating device for heating a fluid comprising.

In order to provide a comfortable air temperature for passengers in a vehicle, electric heating devices are used in modern vehicles to heat fresh air which is supplied into a passenger cabin of the vehicle. In the case of vehicles with conventional combustion engines such electric heating devices or auxiliary heaters are used during the cold start phase in which the waste heat generated by the combustion engine is not sufficient to heat the fresh air to the desired temperature. In hybrid vehicles or fully electrically powered vehicles, the waste heat of the vehicle components is not sufficient to ensure a desired air temperature in the passenger cabin of the vehicle even after a starting phase.

Such electrical heating devices can be designed as air-side or coolant-side auxiliary heaters. In the case of the air-side auxiliary heater, the incoming fresh air flows through the auxiliary heater and is heated to the desired temperature before it enters the cabin. Air-side auxiliary heaters achieve a high degree of efficiency when converting electrical energy into heat. In contrast, a coolant-side auxiliary heater is integrated in a coolant circuit of the vehicle and heats up a coolant which is then passed through fluid pipes. The incoming fresh air is heated by flowing around the fluid pipes.

In order to heat the supplied fresh air or the coolant, the electric heating devices are equipped with at least one PTC heating module that may have a housing. Inside the housing may be at least two contact electrodes with at least one PTC thermistor element which is arranged between the two contact electrodes. The PTC thermistor element has a defined thickness and a given surface. The surface has two opposite main surfaces on which the contact electrodes are placed. The two main surfaces together comprise the largest part of the surface of the PTC thermistor element. The two contact electrodes are supplied with an operating voltage such that a current flow occurs between the two main surfaces.

The PTC thermistor element serves as a heating resistor to convert electrical energy into heat energy. The PTC thermistor element is a temperature-dependent resistor with a positive temperature coefficient (PTC = Positive Temperature Coefficient) providing a non-linear correlation between electrical resistance and temperature of the PTC thermistor element. If a limit temperature is exceeded, the electrical resistance of the PTC thermistor element increases non-linearly with increasing temperature.

A clearance and/or creepage distance is provided between the contact electrodes. The clearance distance is the shortest distance between the contact electrodes and the creepage distance is the shortest distance between the contact electrodes along the surface of the PTC thermistor element. In order to avoid short-circuits between the contact electrodes, the clearance distance and/or creepage distance must be selected so that voltage disruptions are suppressed at a given operating voltage.

Since the contact electrodes contact the main surfaces over the entire surface, the clearance and/or creepage distance corresponds essentially to the thickness of the PTC thermistor element. Consequently, the thickness of the PTC thermistor element should be selected depending on the operating voltage. Thus, a higher operating voltage requires a thicker PTC thermistor element.

Since PTC thermistor elements have a low thermal conductivity, a thick PTC thermistor element cannot dissipate the resulting heat energy sufficiently over its surfaces compared to a thinner PTC thermistor element. This leads to increased heating of thicker PTC thermistor elements increasing the electrical resistance. With increasing thickness of the PTC thermistor element, the heating power decreases which can be dissipated via the surface of the PTC thermistor element in order to heat the fluid.

US5658479 relates to a PTC heating module according to the prior art.

The present invention is based on the task of specifying a PTC heating module according to the features of claim 1 as well as to a heating device that provide a higher heating power at a predetermined operating voltage.

This problem is solved according to the invention by the subject matter of the independent claims. Advantageous embodiments are the subject matter of the dependent claims.

The present invention is based on the general concept that at least one contact electrode only partially contacts a main surface of the PTC thermistor element. The innovative PTC heating module for heating a fluid comprises at least one PTC thermistor element with a first main surface and a second main surface which are spaced opposite each other at a distance from the thickness of the PTC thermistor element. The first main surface can be aligned parallel to the second main surface.

Due to the non-linear correlation between the temperature and the resistance of the PTC thermistor element, the heating power is self-regulating when external boundary conditions change so that the temperature of the PTC thermistor element remains essentially within a specified temperature range. This also prevents overheating of the PTC thermistor element if the flow rate of the fluid is not sufficient to absorb the required amount of heat.

At least the first main surface is divided into a contact area and a rest area, said contact area has an electrically conductive coating. The second main surface has a contact area with an electrically conductive coating. This contact area may comprise the entire surface of the second main surface. The electrically conductive coating may be a silver or aluminium coating. Areas of the surface of the PTC thermistor element without an electrically conductive coating as well as the rest area are electrically insulating. For this purpose, it may be intended that the PTC thermistor element is completely or partially made of a ceramic material.

The first contact electrode is in contact with the contact area of the first main surface and the second contact electrode is in contact with the contact area of the second main surface. In this case, contact means that the respective contact electrode contacts the respective contact area electrically conductive. For this purpose, the contact electrodes may be clamped mechanically, positively and/or cohesively attached to the contact areas.

According to the invention, a clearance and/or creepage distance between the first contact electrode and the second contact electrode is formed which is greater than the thickness of the PTC thermistor element. The clearance and/or creepage distance is the shortest, straight-line connection between the contact electrodes along the surface of the PTC thermistor element. Since at least one contact electrode of the inventive PTC heating module does not completely cover the PTC thermistor element, the clearance and/or creepage distance comprises the thickness of the PTC thermistor element and additionally the distance along the rest area of the first main surface. Given a predetermined operating voltage, a PTC thermistor element with a thickness smaller than the required clearance and/or creepage distance can be used. This reduces overheating of the PTC thermistor element due to its low thermal conductivity and increases the achievable heating performance that can be dissipated via the surface to heat the fluid.

A further advantage is that even at high operating voltage in the range around 800 V thinner PTC thermistor elements can be used to achieve a compact construction of the whole PTC heating module. Moreover, material costs can be reduced by using thinner PTC thermistor elements. In addition, the PTC heating module according to the invention can be easily and inexpensively integrated into existing electric heaters. In addition, the use is possible within vehicles in the high-voltage range (over 60 V) and low-voltage range.

The PTC heating module may comprise a housing which may have a good thermal conductivity so that the heating power provided by the PTC thermistor element can be transferred to the fluid. Therefore, it may be appropriate that the housing is made of a metallic material which is also electrically conductive. In order to avoid personal injuries by touching the housing, the housing should be potential-free. For this purpose, at least one electrically insulating insulator layer can be provided on the contact electrodes. The insulator layer may be arranged between the contact electrodes and the housing. For the insulator layer, a material with a good thermal conductivity must be selected. It can also be provided that the housing of the PTC heating module is made of an electrically insulating material so that the required insulator layer is formed by the housing itself. Good thermal conductivity is given when the thermal conductivity is equal to or higher than the thermal conductivity of the PTC thermistor element. The insulator layer may be made of a ceramic material.

The second main surface is divided into a contact area and a rest area. Since the first main surface as well as the second main surface comprise a rest area, the thickness of the PTC thermistor element can be further reduced at a predetermined operating voltage. Due to this, the achievable heating performance of the PTC thermistor element is further increased.

In a further advantageous embodiment of the solution according to the invention, the clearance and/or creepage distance between the first contact electrode and the second contact electrode is at least 1.5 times the thickness of the PTC thermistor element. This is a technically advantageous compromise between the largest possible contact area and the thinnest possible PTC thermistor element.

A further advantageous embodiment of the solution according to the invention comprises at least two PTC thermistor elements which are arranged at a distance from each other in the housing. The first contact electrode connects the respective contact areas of the first main surfaces of the PTC thermistor elements electrically conductive and the second contact electrode connects the respective contact areas of the second main surfaces of the PTC thermistor elements electrically conductive. The use of several PTC thermistor elements in contrast to a large PTC thermistor element has the advantage of avoiding excessive heating due to poor thermal conductivity. Thus, a larger surface can be supplied with the required heating power. Due to the enlarged surface, a higher amount of fluid can be heated to the desired temperature.

In a further advantageous embodiment of the solution according to the invention, the contact area of at least one main surface has a rectangular shape and the corresponding rest area of this main surface is U-shaped. The main surface opposite this main surface may have an identical shape of the contact area and rest area. It can also be provided that the arrangement of the contact area and rest area of two opposing main surfaces is mirrored on an axis of symmetry of the PTC thermistor element. A rectangular shaped contact area with a U-shaped rest area is advantageous since the required contact electrode can be manufactured easily and inexpensively.

In a further advantageous embodiment of the solution according to the invention, the contact area of at least one main surface has a T-shape and the corresponding rest area of this main surface is U-shaped. The main surface opposite this main surface may have an identical shape of the contact area and rest area. It can also be provided that the arrangement of the contact area and rest area of two opposing main surfaces is mirrored on an axis of symmetry of the PTC thermistor element. A T-shaped contact area with a U-shaped rest area is advantageous since the contact are is more evenly distributed on the respective main surface resulting in a homogeneous temperature distribution within the PTC thermistor element during operation.

In a further advantageous embodiment of the solution according to the invention, the contact area of at least one main surface has a rectangular shape and the corresponding rest area of this main surface is L-shaped. The main surface opposite this main surface may have an identical shape of the contact area and rest area. It can also be provided that the arrangement of the contact area and rest area of two opposing main surfaces is mirrored on an axis of symmetry of the PTC thermistor element. A rectangular shaped contact area with a L-shaped rest area is advantageous since the required contact electrode can be manufactured easily and inexpensively.

In a further advantageous embodiment of the solution according to the invention, the contact area of at least one main surface has a rectangular shape and the corresponding rest area of this main surface is rectangular shaped. The main surface opposite this main surface may have an identical shape of the contact area and rest area. It can also be provided that the arrangement of the contact area and rest area of two opposing main surfaces is mirrored on an axis of symmetry of the PTC thermistor element. A rectangular shaped contact area with a rectangular shaped rest area is advantageous since the required contact electrode can be manufactured easily and inexpensively.

In a further advantageous embodiment of the solution according to the invention, the contact area of at least one main surface has a rectangular shape and the corresponding rest area comprises two rectangular shaped subareas that are separated from each other by the contact area. The main surface opposite this main surface may have an identical shape of the contact area and rest area. It can also be provided that the arrangement of the contact area and rest area of two opposing main surfaces is rotated about an axis that passes through the centroids of both main surfaces of the PTC thermistor element. In addition, the arrangement of the contact area and rest area of two opposing main surfaces may be mirrored on an axis of symmetry of the PTC thermistor element. A rectangular shaped contact area with two rectangular shaped rest areas is advantageous since the required contact electrode can be manufactured easily and inexpensively. For this purpose, the contact electrode may have a substantially rectangular cross-section along a longitudinal extension.

According to the invention, the contact electrodes contact the respective contact areas over their entire surface in order to achieve a homogeneous distribution of the electrical current flow within the PTC thermistor element and thus to ensure that the PTC thermistor element is heated as uniformly as possible.

In a further advantageous embodiment of the solution according to the invention, a part of one contact electrode that is not in contact with a contact area is at a distance from the respective main surface in order to increase the clearance and/or creepage distance between the first contact electrode and the second contact electrode.

Furthermore, the invention relates to a heating device for heating a fluid comprising several inventive PTC heating modules. The PTC heating modules are arranged spaced apart from each other. Thus, a sufficient and homogeneous temperature change can be achieved at a given flow rate of the fluid. The heating device may include a housing into which the PTC heating modules can be integrated in such a way that all electrically conductive components within the housing of the heating device and within the housing of the PTC heating modules are dust- and watertight encapsulated. The heater can be designed to provide at least 3 kW of heating power.

In a further advantageous embodiment of the solution according to the invention, at least one PTC heating module is arranged in such a way that the main surfaces of one PTC thermistor element extend substantially parallel to a flow direction of the fluid. Due to this, the fluid flows along the largest part of the surface of the PTC thermistor element resulting in an optimum heat transfer to the fluid.

In a further advantageous embodiment of the solution according to the invention, the heating device is connected to a voltage source and supplies the contact electrodes of one PTC heating module with an operating voltage. This voltage source may be the battery of a vehicle and the operating voltage can be up to 800 V or more.

In a further advantageous embodiment of the solution according to the invention, the heating device is integrated in a vehicle as an air-side and/or coolant-side auxiliary heater. It may be provided that the air-side design of the heating device complies with at least protection class IP54 and, in the case of coolant-side design, with at least protection class IP6K9K. As an air-side heater, the heated air can also be used to heat the battery of the vehicle. The air-side heater may be integrated in an air conditioning device of the vehicle. As a coolant-side heater, the waste heat from components of the vehicle may be used additionally to heat the fresh air. Furthermore, the heating device may be communicatively connected to a control device of the vehicle.

Further important features and advantages of the invention emerge from the dependent claims, from the drawings and from the associated description of the figures with reference to the drawings.

It goes without saying that the features mentioned above and those which have yet to be explained below can be used not only in the respectively stated combination, but also in different combinations or on their own without departing from the scope of the present invention.

Preferred exemplary embodiments of the invention are illustrated in the drawings and are explained in more detail in the description below, wherein the same reference signs refer to identical or similar or functionally identical components.

In the drawings, in each case schematically,
- Fig. 1: a cross-section of a PTC heating module according to the invention,
- Fig. 2: a perspective view of the components arranged within the PTC heating module of Fig. 1,
- Fig. 3: a perspective view of a PTC thermistor element with T-shaped contact areas,
- Fig. 4: a perspective view of a PTC thermistor element with L-shaped rest areas,
- Fig. 5: a perspective view of a PTC thermistor element with differently divided main surfaces,
- Fig. 6: a perspective view of a further PTC thermistor element.

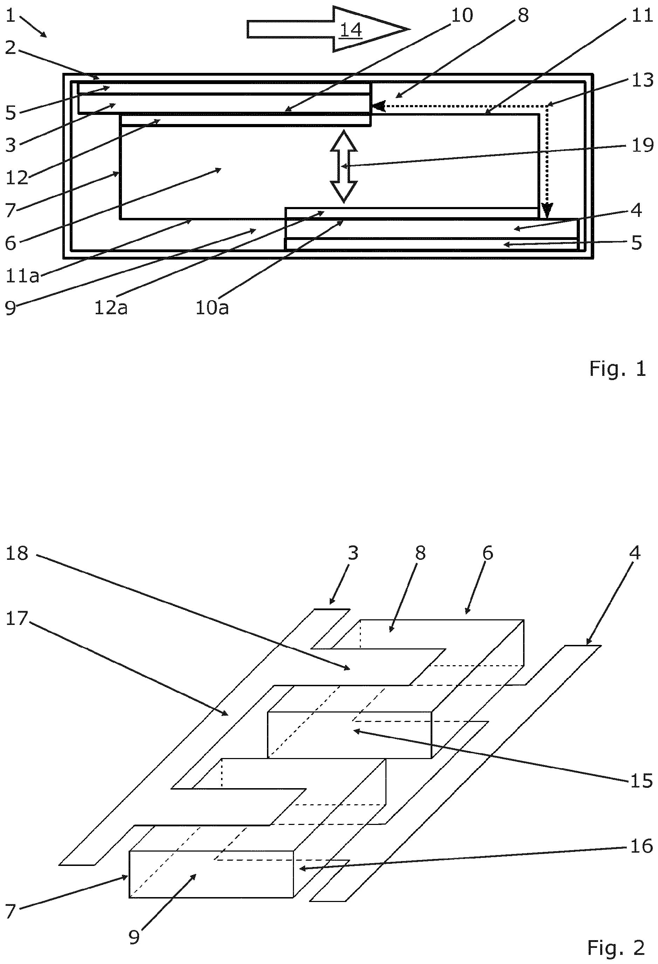

According to Fig. 1, a PTC heating module 1 according to the invention has a housing 2 with a rectangular cross-section. A first electrically conductive contact electrode 3 and a second electrically conductive contact electrode 4 are arranged spaced apart from each other in the housing 2. If the housing 2 consists of an electrically conductive material, an insulator layer 5 is provided between the respective contact electrode 3,4 and housing 2. The insulator layer 5 prevents an electrically conductive connection between the contact electrodes 3,4 and housing 2. The insulator layer 5 may be provided as in Fig. 1 within the housing 2 on partial surfaces. It is also conceivable that the inner surface of the housing 2 is completely provided with the insulator layer 5.

A cuboidal PTC thermistor element 6 is arranged between the first contact electrode 3 and the second contact electrode 4 and has a rectangular cross-section as shown in Fig. 1. The PTC thermistor element 6 has a surface with a first main surface 8 and a second main surface 9 which are spaced opposite each other at a distance from the thickness 7 of the PTC thermistor element 6. The first main surface 8 is aligned substantially parallel to the second main surface 9. The two main surfaces 8,9 together comprise the largest part of the surface of the PTC thermistor element 6.

The first main surface 8 is divided into a contact area 10 with an electrically conductive coating 12 and a rest area 11. The first contact electrode 3 is in contact with the contact area 10 of the first main surface 8 and is electrically connected to it. The second main surface 9 is divided into a contact area 10a with an electrically conductive coating 12a and a rest area 11a. The second contact electrode 4 is in contact with the contact area 10a of the second main surface 9 and is electrically connected to it. Areas of the surface without an electrically conductive coating as well as rest areas 11 and 11a are electrically insulating.

If the contact electrodes 3 and 4 are supplied with an operating voltage, a current flow through the PTC thermistor element 6 occurs along a current flow direction of 19. The contact areas 10 and 10a and the respective contact electrodes 3 and 4 are arranged in such a way that that the shortest path of the current flow inside the PTC thermistor element 6 substantially corresponds to the thickness 7 of the PTC thermistor element 6.

The free area inside the housing 2 is filled with air which has a certain dielectric strength. Given a predetermined operating voltage between the first contact electrode 3 and the second contact electrode 4, a sufficient clearance and/or creepage 13 is required in order to avoid short-circuits between the contact electrodes 3 and 4. The clearance and/or creepage 13 comprises the thickness 7 of the PTC thermistor element 6 and additionally the shortest path along the respective rest area 11 and/or 11a. Thus, the clearance and/or creepage 13 is larger than the thickness 7 of the PTC thermistor element 6. Using a thinner PTC thermistor element 6 reduces an unwanted overheating due to the low thermal conductivity of the material of the PTC thermistor element 6 and increases the achievable heating performance that can be dissipated via the surface to heat the fluid.

A non-pictured electrical heater has at least one PTC heater module 1 which is oriented such that the current flow direction 19 is substantially transverse to the fluid flow direction 14. As a result, the first main area 8 and the second main area 9 are aligned substantially parallel to the fluid flow direction 14. Such an alignment of the PTC heating module 1 has the advantage that the maximum possible heat transfer to the fluid is achieved since the contact time between the fluid and the housing 2 is maximized.

Fig. 2 shows a perspective representation of two PTC thermistor elements 6 spaced apart from each other. The first main surfaces 8 are in a common plane and the second main surfaces 9 are in another common plane. The dashed lines in this representation and the following representations symbolize hidden edges.

The PTC thermistor elements 6 are cuboid-shaped and have front faces 15 and side faces 16 while the front faces 15 of two adjacent PTC thermistor elements 6 face each other. The contact electrodes 3 and 4 each have a longitudinal bar 17 and several transverse bars 18, the longitudinal bars 17 are arranged on the sides of the side faces 16. The contact areas of the first main surfaces 8 are not visible in Fig. 2. The transverse bars 18 of the first contact electrode 3 contact these contact areas over their entire surface and connect them electrically conductive. The transverse bars 18 of the second contact electrode 4 contact the not shown contact areas of the second main surfaces 9 over their entire surface and connect them electrically conductive. This results in a parallel connection of the PTC thermistor elements 6.

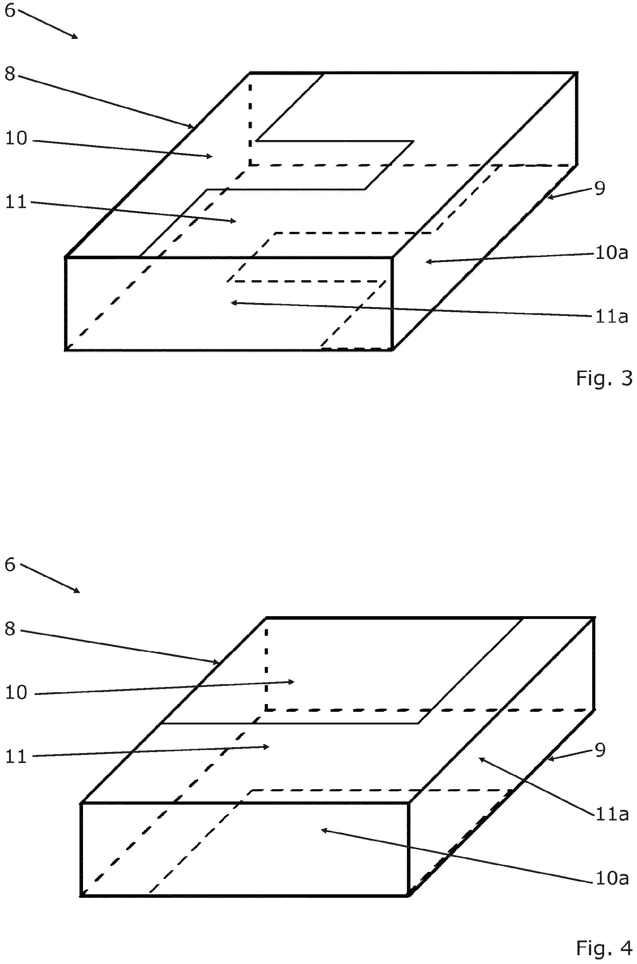

Fig. 3 shows a PTC thermistor element 6 with a first surface 8 that has a T-shaped contact area 10 and a U-shaped rest area 11. The second surface 9 has a T-shaped contact area 10a and a U-shaped rest area 11a. The arrangement of the contact area and rest area of the opposing main surfaces 8,9 is mirrored.

Fig. 4 shows a PTC thermistor element 6 with a first surface 8 that has a rectangular shaped contact area 10 and a L-shaped rest area 11. The second surface 9 has a rectangular shaped contact area 10a and a L-shaped rest area 11a. The arrangement of the contact area and rest area of the opposing main surfaces 8,9 is mirrored.

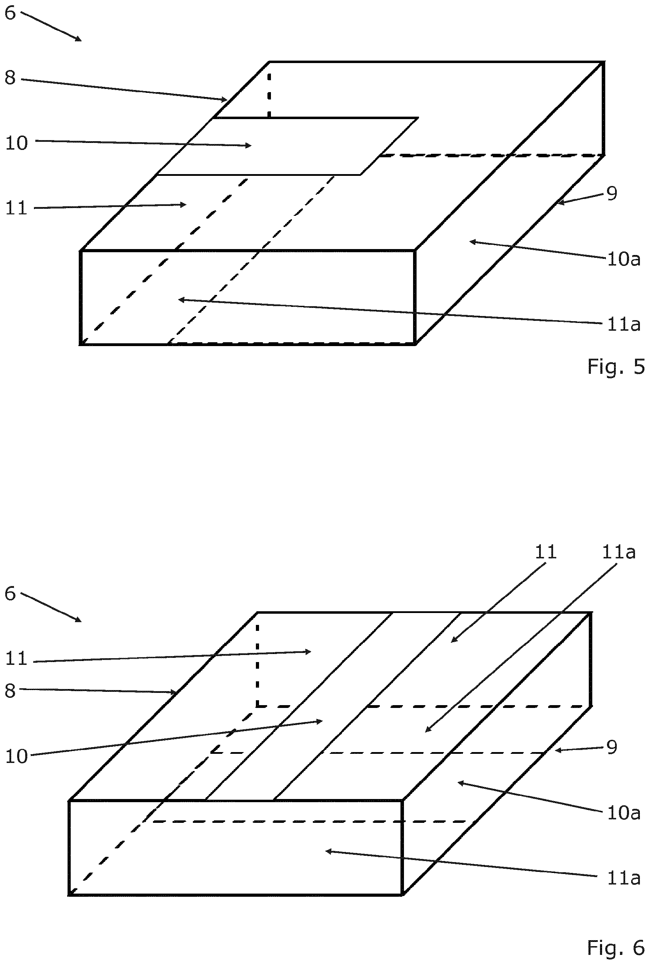

Fig. 5 shows a PTC thermistor element 6 with a first surface 8 that has a rectangular shaped contact area 10 and a U-shaped rest area 11. The second surface 9 has a rectangular shaped contact area 10a and a rectangular shaped rest area 11a. The arrangement of the contact area and rest area of the opposing main surfaces 8,9 is mirrored. The longitudinal extension directions of the contact area 10 and contact area 10a are substantially perpendicular to each other.

Fig. 6 shows a PTC thermistor element 6 with a first surface 8 that has a rectangular shaped contact area 10 and a rest area 11 with two rectangular shaped subareas which are separated by the contact area 10. The second surface 9 has a rectangular shaped contact area 10a and a rest area 11a with two rectangular shaped subareas which are separated by the contact area 10a. The longitudinal extension directions of the contact area 10 and contact area 10a are substantially perpendicular to each other.

## Claims

1. A PTC heating module for heating a fluid comprising:
- at least one first electrically conductive contact electrode (3) and a second electrically conductive contact electrode (4) which are arranged spaced apart from each other,
- at least one insulator layer (5) attached to the contact electrodes (3,4),
- at least one PTC thermistor element (6) of a certain thickness (7),
- the PTC thermistor element (6) having a first main surface (8) and a second main surface (9) spaced opposite each other at a distance from the thickness (7) of the PTC thermistor element (6),
- a clearance and/or creepage distance (13) between the first contact electrode (3) and the second contact electrode (4) which is greater than the thickness (7) of the PTC thermistor element (6), **characterized in that**
- said first main surface (8) is divided into a contact area (10) and a rest area (11), said contact area (10) having an electrically conductive coating (12),
- said second main surface (9) having a contact area (10a) with an electrically conductive coating (12a),
- said first contact electrode (3) is in contact with the contact area (10) of the first main surface (8) and said second contact electrode (4) is in contact with the contact area (10a) of the second main surface (8),
- the second main surface (9) is divided into a contact area (10a) and a rest area (11a),
- the contact electrodes (3,4) contact the respective contact areas (10, 10a) over their entire surface,
- the PTC thermistor element (6) is completely or partially made of a ceramic material,
- areas of the surface of the PTC thermistor element (6) without an electrically conductive coating (12,12a) as well as the rest area (11, 11a) are electrically insulating.

2. The PTC heating module according to claim 1 ,
wherein the clearance and/or creepage distance (13) between the first contact electrode (3) and the second contact electrode (4) is at least 1.5 times the thickness (7) of the PTC thermistor element (6).

3. The PTC heating module according to any one of the preceding claims, further comprising
- at least two PTC thermistor elements (6) which are arranged at a distance from each other,
- the first contact electrode (3) connects the respective contact areas (10) of the first main surfaces (8) of the PTC thermistor elements (6) electrically conductive and the second contact electrode (4) connects the respective contact areas (10a) of the second main surfaces (9) of the PTC thermistor elements (6) electrically conductive.

4. The PTC heating module according to any one of the preceding claims, wherein the contact area (10,10a) of at least one main surface (8,9) has a rectangular shape and the corresponding rest area (11, 11a) of this main surface (8,9) is U-shaped.

5. The PTC heating module according to any one of claims 1 to 4, wherein the contact area (10,10a) of at least one main surface (8,9) has a T-shape and the corresponding rest area (11, 11a) of this main surface (8,9) is U-shaped.

6. The PTC heating module according to any one of claims 1 to 4, wherein the contact area (10,10a) of at least one main surface (8,9) has a rectangular shape and the corresponding rest area (11, 11a) of this main surface (8,9) is L-shaped.

7. The PTC heating module according to any one of claims 1 to 4, wherein the contact area (10,10a) of at least one main surface (8,9) has a rectangular shape and the corresponding rest area (11, 11a) of this main surface (8,9) is rectangular shaped.

8. The PTC heating module according to any one of claims 1 to 4, wherein the contact area (10,10a) of at least one main surface (8,9) has a rectangular shape and the corresponding rest area (11, 11a) comprises two rectangular shaped subareas that are separated from each other by the contact area (10,10a).

9. The PTC heating module according to any one of the preceding claims, wherein a part of one contact electrode (3,4) that is not in contact with a contact area (10,10a) is at a distance from the respective main surface (8,9).

10. A heating device for heating a fluid comprising:
- several PTC heating modules (1) according to any one of the preceding claims,
- said PTC heating modules (1) are arranged spaced apart from each other.

11. The heating device according to claim 10,
wherein at least one PTC heating module (1) is arranged in such a way that the main surfaces (8,9) of one PTC thermistor element (6) extend substantially parallel to a flow direction of the fluid.

12. The heating device according to claim 10 or 11,
wherein the heating device is connected to a voltage source and supplies the contact electrode (3,4) of one PTC heating module (1) with an operating voltage.

13. The heating device according to any one of claims 10 through 12, wherein the heating device is integrated in a vehicle as an air-side and/or coolant-side auxiliary heater.

## Patentansprüche

1. PTC-Heizmodul zum Erwärmen eines Fluids, das Folgendes umfasst:
- mindestens eine erste elektrisch leitfähige Kontaktelektrode (3) und eine zweite elektrisch leitfähige Kontaktelektrode (4), die voneinander beabstandet eingerichtet sind,
- mindestens eine Isolatorschicht (5), die an den Kontaktelektroden (3, 4) angebracht ist,
- mindestens ein PTC-Thermistorelement (6) einer gewissen Dicke (7),
- wobei das PTC-Thermistorelement (6) eine erste Hauptoberfläche (8) und eine zweite Hauptoberfläche (9) aufweist, die gegenüber voneinander bei einem Abstand von der Dicke (7) des PTC-Thermistorelements (6) beabstandet liegen,
- einen Freiraum und/oder eine Kriechstrecke (13) zwischen der ersten Kontaktelektrode (3) und der zweiten Kontaktelektrode (4), der/die größer als die Dicke (7) des PTC-Thermistorelements (6) ist, **dadurch gekennzeichnet, dass**
- die erste Hauptoberfläche (8) in einen Kontaktbereich (10) und einen Restbereich (11) unterteilt ist, wobei der Kontaktbereich (10) eine elektrisch leitfähige Beschichtung (12) aufweist,
- die zweite Hauptoberfläche (9) einen Kontaktbereich (10a) mit einer elektrisch leitfähigen Beschichtung (12a) aufweist,
- die erste Kontaktelektrode (3) in Kontakt mit dem Kontaktbereich (10) der ersten Hauptoberfläche (8) ist und die zweite Kontaktelektrode (4) in Kontakt mit dem Kontaktbereich (10a) der zweiten Hauptoberfläche (8) ist,
- die zweite Hauptoberfläche (9) in einen Kontaktbereich (10a) und einen Restbereich (11a) unterteilt ist,
- die Kontaktelektroden (3, 4) die jeweiligen Kontaktbereiche (10, 10a) über deren gesamte Oberfläche kontaktieren,
- das PTC-Thermistorelement (6) vollständig oder teilweise aus einem keramischen Material hergestellt ist,
- Bereiche der Oberfläche des PTC-Thermistorelements (6) ohne eine elektrisch leitfähige Beschichtung (12, 12a), wie auch der Restbereich (11, 11a), elektrisch isolierend sind.

2. PTC-Heizmodul nach Anspruch 1,
wobei der Freiraum und/oder die Kriechstrecke (13) zwischen der ersten Kontaktelektrode (3) und der zweiten Kontaktelektrode (4) mindestens 1,5-mal die Dicke (7) des PTC-Thermistorelements (6) ist.

3. PTC-Heizmodul nach einem der vorstehenden Ansprüche, das weiter Folgendes umfasst
- mindestens zwei PTC-Thermistorelemente (6), die bei einem Abstand voneinander eingerichtet sind,
- die erste Kontaktelektrode (3) die jeweiligen Kontaktbereiche (10) der ersten Hauptoberflächen (8) der PTC-Thermistorelemente (6) elektrisch leitfähig verbindet und die zweite Kontaktelektrode (4) die jeweiligen Kontaktbereiche (10a) der zweiten Hauptoberflächen (9) der PTC-Thermistorelemente (6) elektrisch leitfähig verbindet.

4. PTC-Heizmodul nach einem der vorstehenden Ansprüche,
wobei der Kontaktbereich (10, 10a) mindestens einer Hauptoberfläche (8, 9) eine rechteckige Form aufweist und der entsprechende Restbereich (11, 11a) dieser Hauptoberfläche (8, 9) U-förmig ist.

5. PTC-Heizmodul nach einem der Ansprüche 1 bis 4,
wobei der Kontaktbereich (10, 10a) mindestens einer Hauptoberfläche (8, 9) eine T-Form aufweist und der entsprechende Restbereich (11, 11a) dieser Hauptoberfläche (8, 9) U-förmig ist.

6. PTC-Heizmodul nach einem der Ansprüche 1 bis 4,
wobei der Kontaktbereich (10, 10a) mindestens einer Hauptoberfläche (8, 9) eine rechteckige Form aufweist und der entsprechende Restbereich (11, 11a) dieser Hauptoberfläche (8, 9) L-förmig ist.

7. PTC-Heizmodul nach einem der Ansprüche 1 bis 4,
wobei der Kontaktbereich (10, 10a) mindestens einer Hauptoberfläche (8, 9) eine rechteckige Form aufweist und der entsprechende Restbereich (11, 11a) dieser Hauptoberfläche (8, 9) rechteckig geformt ist.

8. PTC-Heizmodul nach einem der Ansprüche 1 bis 4,
wobei der Kontaktbereich (10, 10a) mindestens einer Hauptoberfläche (8, 9) eine rechteckige Form aufweist und der entsprechende Restbereich (11, 11a) zwei rechteckig geformte Teilbereiche umfasst, die voneinander durch den Kontaktbereich (10, 10a) getrennt sind.

9. PTC-Heizmodul nach einem der vorstehenden Ansprüche,
wobei ein Teil einer Kontaktelektrode (3, 4), der nicht in Kontakt mit einem Kontaktbereich (10, 10a) ist, bei einem Abstand von der jeweiligen Hauptoberfläche (8, 9) ist.

10. Heizvorrichtung zum Erwärmen eines Fluids, die Folgendes umfasst:
- einige PTC-Heizmodule (1) nach einem der vorstehenden Ansprüche,
- wobei die PTC-Heizmodule (1) voneinander beabstandet eingerichtet sind.

11. Heizvorrichtung nach Anspruch 10,
wobei mindestens ein PTC-Heizmodul (1) so eingerichtet ist, dass die Hauptoberflächen (8, 9) eines PTC-Thermistorelements (6) sich im Wesentlichen parallel zu einer Flussrichtung des Fluids erstrecken.

12. Heizvorrichtung nach Anspruch 10 oder 11,
wobei die Heizvorrichtung mit einer Spannungsquelle verbunden ist und die Kontaktelektrode (3, 4) eines PTC-Heizmoduls (1) mit einer Betriebsspannung versorgt.

13. Heizvorrichtung nach einem der Ansprüche 10 bis 12,
wobei die Heizvorrichtung in ein Fahrzeug als ein luftseitiger und/oder kältemittelseitiger Hilfsheizer integriert ist.

## Revendications

1. Module de chauffage PTC pour chauffer un fluide, comprenant :
- au moins une première électrode de contact électriquement conductrice (3) et une seconde électrode de contact électriquement conductrice (4) qui sont agencées à distance l'une de l'autre,
- au moins une couche isolante (5) fixée aux électrodes de contact (3, 4),
- au moins un élément de thermistance PTC (6) d'une certaine épaisseur (7),
- l'élément de thermistance PTC (6) présentant une première surface principale (8) et une seconde surface principale (9) espacées l'une de l'autre à une distance de l'épaisseur (7) de l'élément de thermistance PTC (6),
- une distance de jeu et/ou de fuite (13) entre la première électrode de contact (3) et la seconde électrode de contact (4) qui est supérieure à l'épaisseur (7) de l'élément de thermistance PTC (6), **caractérisé en ce que**
- ladite première surface principale (8) est divisée en une zone de contact (10) et une zone de repos (11), ladite zone de contact (10) présentant un revêtement électriquement conducteur (12),
- ladite seconde surface principale (9) présentant une zone de contact (10a) avec un revêtement électriquement conducteur (12a),
- ladite première électrode de contact (3) est en contact avec la zone de contact (10) de la première surface principale (8) et ladite seconde électrode de contact (4) est en contact avec la zone de contact (10a) de la seconde surface principale (8),
- la seconde surface principale (9) est divisée en une zone de contact (10a) et une zone de repos (11a),
- les électrodes de contact (3, 4) viennent en contact avec les zones de contact respectives (10, 10a) sur toute leur surface,
- l'élément de thermistance PTC (6) est entièrement ou partiellement réalisé en un matériau de céramique,
- des zones de la surface de l'élément de thermistance PTC (6) sans un revêtement électriquement conducteur (12, 12a) ainsi que la zone de repos (11, 11a) sont électriquement isolantes.

2. Module de chauffage PTC selon la revendication 1,
dans lequel la distance de jeu et/ou de fuite (13) entre la première électrode de contact (3) et la seconde électrode de contact (4) est au moins 1,5 fois l'épaisseur (7) de l'élément de thermistance PTC (6).

3. Module de chauffage PTC selon l'une quelconque des revendications précédentes, comprenant en outre
- au moins deux éléments de thermistance PTC (6) qui sont agencés à une certaine distance l'un de l'autre,
- la première électrode de contact (3) connecte les zones de contact respectives (10) des premières surfaces principales (8) des éléments de thermistance PTC (6) électriquement conducteurs et la seconde électrode de contact (4) connecte les zones de contact respectives (10a) des secondes surfaces principales (9) des éléments de thermistance PTC (6) électriquement conducteurs.

4. Module de chauffage PTC selon l'une quelconque des revendications précédentes, dans lequel la zone de contact (10, 10a) d'au moins une surface principale (8, 9) présente une forme rectangulaire et la zone de repos correspondante (11, 11a) de cette surface principale (8, 9) est en forme de U.

5. Module de chauffage PTC selon l'une quelconque des revendications 1 à 4,
dans lequel la zone de contact (10, 10a) d'au moins une surface principale (8, 9) présente une forme de T et la zone de repos correspondante (11, 11a) de cette surface principale (8, 9) est en forme de U.

6. Module de chauffage PTC selon l'une quelconque des revendications 1 à 4,
dans lequel la zone de contact (10, 10a) d'au moins une surface principale (8, 9) présente une forme rectangulaire et la zone de repos correspondante (11, 11a) de cette surface principale (8, 9) est en forme de L.

7. Module de chauffage PTC selon l'une quelconque des revendications 1 à 4,
dans lequel la zone de contact (10, 10a) d'au moins une surface principale (8, 9) présente une forme rectangulaire et la zone de repos correspondante (11, 11a) de cette surface principale (8, 9) est de forme rectangulaire.

8. Module de chauffage PTC selon l'une quelconque des revendications 1 à 4,
dans lequel la zone de contact (10, 10a) d'au moins une surface principale (8, 9) présente une forme rectangulaire et la zone de repos correspondante (11, 11a) comprend deux sous-zones de forme rectangulaire qui sont séparées l'une de l'autre par la zone de contact (10, 10a).

9. Module de chauffage PTC selon l'une quelconque des revendications précédentes, dans lequel une partie d'une électrode de contact (3, 4) qui n'est pas en contact avec une zone de contact (10, 10a) est à une distance de la surface principale respective (8, 9).

10. Dispositif de chauffage pour chauffer un fluide comprenant :
- plusieurs modules de chauffage PTC (1) selon l'une quelconque des revendications précédentes,
- lesdits modules de chauffage PTC (1) sont agencés à distance les uns des autres.

11. Dispositif de chauffage selon la revendication 10,
dans lequel au moins un module de chauffage PTC (1) est agencé de telle sorte que les surfaces principales (8, 9) d'un élément de thermistance PTC (6) s'étendent sensiblement parallèlement à une direction d'écoulement du fluide.

12. Dispositif de chauffage selon la revendication 10 ou 11,
dans lequel le dispositif de chauffage est connecté à une source de tension et alimente l'électrode de contact (3, 4) d'un module de chauffage PTC (1) avec une tension de fonctionnement.

13. Dispositif de chauffage selon l'une quelconque des revendications 10 à 12, dans lequel le dispositif de chauffage est intégré dans un véhicule en tant que chauffage auxiliaire côté air et/ou côté réfrigérant.
